(19) Europäisches Patentamt / European Patent Office / Office européen des brevets

(11) **EP 4 230 694 A1**

(12) **EUROPEAN PATENT APPLICATION**
published in accordance with Art. 153(4) EPC

(43) Date of publication:
**23.08.2023  Bulletin 2023/34**

(21) Application number: **21880101.7**

(22) Date of filing: **12.10.2021**

(51) International Patent Classification (IPC):
**C08L 23/10** $^{(2006.01)}$     **C08K 7/14** $^{(2006.01)}$
**C08L 23/26** $^{(2006.01)}$

(52) Cooperative Patent Classification (CPC):
**C08K 7/14; C08L 23/10; C08L 23/26**

(86) International application number:
**PCT/JP2021/037719**

(87) International publication number:
**WO 2022/080363 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2020   JP 2020174508**

(71) Applicant: **SUMITOMO CHEMICAL COMPANY, LIMITED**
**Tokyo 103-6020 (JP)**

(72) Inventor: **ISHIZUKA, Kenta**
**Ichihara-shi, Chiba 299-0195 (JP)**

(74) Representative: **Global IP Europe Patentanwaltskanzlei**
**Pfarrstraße 14**
**80538 München (DE)**

(54) **POLYPROPYLENE-BASED RESIN COMPOSITION**

(57)    Provided is a polypropylene-based resin composition capable of improving the moist-heat resistance of a molded product. The polypropylene-based resin composition includes: component (A) of a polypropylene-based polymer that is contained in an amount of 40-90 mass%; component (B) of an acid-modified polypropylene that is contained in an amount of 0.1-10 mass%; and component (C) of a glass fiber which has a water-soluble base component amount of at most 0.1 mmol/g, and a water-soluble weak acid salt content of at most 0.1 mmol/g and which is contained in an amount of 10-60 mass%.

EP 4 230 694 A1

**Description**

TECHNICAL FIELD

The present invention relates to a polypropylene-based resin composition and a molded product thereof.

BACKGROUND ART

A polyolefin-based resin obtained by polymerizing a monomer mainly containing an olefin is excellent in molding processability and the like, and therefore is used as, for example, materials for interior and exterior members for an automobile.
As a polyolefin-based resin composition assumed to be used as materials for interior and exterior members for an automobile, for example, a polypropylene-based resin composition containing a polypropylene-based polymer and a glass fiber is known (see Patent Document 1).

PRIOR ART DOCUMENT

PATENT DOCUMENT

Patent Document 1: WO-A-2014/157391

SUMMARY OF THE INVENTION

PROBLEMS TO BE SOLVED BY THE INVENTION

In recent years, studies have been made on application of a resin part to an automobile part particularly exposed to a high-temperature and highhumidity environment, for example, a part in an engine room.
However, the conventional polypropylene-based resin composition according to Patent Document 1 does not have sufficient wet-heat resistance.

MEANS FOR SOLVING THE PROBLEMS

As a result of intensive studies to solve the above problem, the present inventors have found that the above problem can be solved by inclusion of a glass fiber satisfying a predetermined parameter in a polypropylene-based resin composition, and have completed the present invention.
That is, the present invention provides the following [1] to [5] .

[1] A polypropylene-based resin composition containing:

40 to 90 mass% of a component (A): polypropylene-based polymer;
0.1 to 10 mass% of a component (B): acid-modified polypropylene-based polymer; and
10 to 60 mass% of a component (C): glass fiber having a water-soluble base component content of 0.1 mmol/g or less and a water-soluble weak acid salt content of 0.1 mmol/g or less.

[2] The polypropylene-based resin composition according to [1], in which the component (C) is a glass fiber having a total nitrogen content of 70 ppm or more as measured by a chemiluminescence method.
[3] The polypropylene-based resin composition according to [1] or [2], having a melt flow rate of 1 to 20 g/10 min as measured under conditions of a temperature of 230°C and a load of 2.16 kgf.
[4] The polypropylene-based resin composition according to any one of [1] to [3], in which the component (B) is an acid-modified polypropylene-based polymer having a total graft amount of an unsaturated carboxylic acid unit and an unsaturated carboxylic acid derivative unit of 0.3 mass% or more and a melt flow rate of 300 g/10 min or less as measured under conditions of a temperature of 230°C and a load of 2.16 kgf.
[5] The polypropylene-based resin composition according to any one of [1] to [4], further containing 0.01 to 1 part by mass of a component (D): nucleating agent with respect to 100 parts by mass of a total amount of the components (A), (B), and (C).
[6] A molded product containing the polypropylene-based resin composition according to any one of [1] to [5].
[7] An air intake manifold containing the polypropylene-based resin composition according to any one of [1] to [5].

EFFECT OF THE INVENTION

A polypropylene-based resin composition according to the present invention can provide a polypropylene-based resin composition capable of improving wet-heat resistance (wet-heat resistance strength retention) of a molded product, and a molded product having improved wet-heat resistance (wet-heat resistance strength retention).

MODE FOR CARRYING OUT THE INVENTION

1. Explanation of terms

In describing an embodiment of the present invention, first, commonly used terms will be described.

In the present specification, "monomer unit" means a constituent unit (residue) derived from a monomer contained in a polymer obtained by polymerizing a monomer.

In the present specification, "a-olefin" means an olefin containing a carbon atom chain having three or more carbon atoms with a carbon-carbon double bond on a terminal side (a-position) thereof.

In the present specification, "limiting viscosity number (unit: dL/g)" is a value measured at a temperature of 135°C using tetralin as a solvent by the following method.

The limiting viscosity number can be determined by an "extrapolation method" in which values of reduced viscosity are measured for a plurality of concentrations using an Ubbelohde viscometer, respectively, the values of reduced viscosity are plotted with respect to the concentrations, respectively, and a concentration is extrapolated to zero. More specifically, the limiting viscosity number can be determined by a method for measuring values of reduced viscosity for three points of concentrations of 0.1 g/dL, 0.2 g/dL, and 0.5 g/dL, respectively, using the method described on page 491 of "Polymer Solution, Polymer Experiment 11" (published by KYORITSU SHUPPAN CO., LTD., 1982), plotting the values of reduced viscosity with respect to the concentrations, respectively, and extrapolating a concentration to zero.

In the present specification, "melt flow rate (MFR)" means the "melt mass flow rate" described in JIS K7210: 1999.

In the present specification, unless otherwise specified, "%" means mass%, and "part" means "part by weight".

2. Polypropylene-based resin composition

Hereinafter, a polypropylene-based resin composition of the present embodiment will be specifically described.

The polypropylene-based resin composition of the present embodiment contains:

40 to 90 mass% of a component (A): polypropylene-based polymer;
0.1 to 10 mass% of a component (B): acid-modified polypropylene-based polymer; and
10 to 60 mass% of a component (C): glass fiber having a water-soluble base component content of 0.1 mmol/g or less and a water-soluble weak acid salt content of 0.1 mmol/g or less.

Note that the content of each of the above components is a value when the total amount of the polypropylene-based resin composition is 100 mass%.

(Melt flow rate of polypropylene-based resin composition)

The polypropylene-based resin composition of the present embodiment has a melt flow rate (230°C, load: 2.16 kgf) of preferably 1 g/10 min or more, more preferably 2 g/10 min or more, preferably 20 g/10 min or less, more preferably 12 g/10 min or less, still more preferably 10 g/10 min or less.

When the melt flow rate of the polypropylene-based resin composition of the present embodiment is as described above, the properties of a molded product obtained by molding the polypropylene-based resin composition of the present embodiment can be further improved, and in particular, both strength (weld strength) and wet-heat resistance (wet-heat resistance strength retention) of the molded product can be achieved.

(Use of polypropylene-based resin composition)

Using the polypropylene-based resin composition of the present embodiment, a molded product (particularly, an injection molded product) excellent in wet-heat resistance can be produced.

Therefore, the polypropylene-based resin composition of the present embodiment (and a molded product thereof) can be suitably applied as, for example, materials for interior and exterior parts for an automobile, parts in an engine room, parts for a motorcycle, parts for an electrical appliance, various containers and parts thereof, and furniture and parts thereof.

The polypropylene-based resin composition of the present embodiment is particularly suitable as materials for interior and exterior parts for an automobile and parts in an engine room that are required to have excellent wet-heat resistance and weather resistance. Examples of the interior and exterior parts for an automobile include an instrument panel, a door trim, a pillar, a side protector, a console box, a column cover, a bumper, a fender, and a wheel cover. Examples of the parts in an engine room for an automobile include a battery case, an engine cover, and an air intake manifold. Examples of the parts for a motorcycle include a cowling and a muffler cover. Among these materials, the polypropylene-based resin composition of the present embodiment can be particularly suitably used as a material of an air intake manifold used in an engine room for an automobile.

Here, components that can be contained in the polypropylene-based resin composition of the present embodiment will be specifically described.

(1) Component (A): polypropylene-based polymer

The content of a propylene unit as a monomer unit contained in the polypropylene-based polymer is usually 100 mass% or less. The polypropylene-based polymer is a polymer containing a propylene unit in an amount of more than 50 mass% when the content of all constituent units contained in the polypropylene-based polymer is 100 mass%.

Examples of the polypropylene-based polymer include a propylene homopolymer and a copolymer of propylene and another monomer copolymerizable with propylene. Such a copolymer may be a random copolymer (hereinafter, also referred to as a polypropylene-based random copolymer) or a block copolymer.

The polypropylene-based resin composition may contain one kind of polypropylene-based polymer alone, or may contain two or more kinds of polypropylene-based polymers in any combination at any ratio.

Examples of the combination of two or more kinds of polypropylene-based polymers include a combination of two or more kinds of propylene homopolymers having different weight average molecular weights and the like, and a combination of the following polymer (I) and polymer (II).

The polypropylene-based resin composition may contain a heterophasic propylene polymerization material as the polypropylene-based polymer. Here, the heterophasic propylene polymerization material means a polypropylene-based polymer (composition) containing the following polymer (I) and polymer (II), in which the polymer (I) and the polymer (II) are not compatible with each other and form different phases.

Here, the polymer (I) is a polypropylene-based polymer containing a propylene unit in an amount of more than 80 mass% and 100 mass% or less when the content of all constituent units is 100 mass%. The polymer (I) may be a propylene homopolymer or a copolymer of propylene and another monomer.

The polymer (II) is a polypropylene-based polymer which is a copolymer of a propylene unit and at least one kind of monomer unit selected from the group consisting of an ethylene unit and an $\alpha$-olefin unit having 4 or more carbon atoms.

As each of the polymer (I) and the polymer (II), one kind of polymer may be used alone, or two or more kinds of polymers may be used in combination.

The polypropylene-based polymer preferably contains one or more kinds selected from the group consisting of a propylene homopolymer and a heterophasic propylene polymerization material, and is more preferably a propylene homopolymer from a viewpoint of improving rigidity and impact resistance of a molded product containing the resin composition, that is, a molded product obtained by molding the polypropylene-based resin composition.

The polypropylene-based polymer has an isotactic pentad fraction (also referred to as a [mmmm] fraction) of preferably 0.97 or more, more preferably 0.98 or more as measured by $^{13}$C-NMR from a viewpoint of further improving the rigidity of a molded product containing the polypropylene-based resin composition.

It can be said that the closer the isotactic pentad fraction of the polypropylene-based polymer is to 1, the higher stereoregularity of a molecular structure of the polypropylene-based polymer is, and the higher crystallinity of the polypropylene-based polymer is.

When the polypropylene-based polymer is a copolymer, the isotactic pentad fraction can be measured for a chain of propylene units in the copolymer.

The polypropylene-based polymer has a melt flow rate (MFR) of preferably 1 g/10 min or more, more preferably 2 g/10 min or more as measured in accordance with JIS K7210 under conditions of 230°C and a load of 2.16 kgf from a viewpoint of further improving molding processability of the polypropylene-based resin composition. The melt flow rate of the polypropylene-based polymer is preferably 200 g/10 min or less, and more preferably 20 g/10 min or less. In an aspect, the melt flow rate of the polypropylene-based polymer is preferably 2 g/10 min to 10 g/10 min.

The polypropylene-based polymer can be produced, for example, by a polymerization method using a polymerization catalyst.

Examples of the polymerization catalyst include: a Ziegler type catalyst; a Ziegler-Natta type catalyst; a catalyst containing a compound containing a transition metal element of group 4 of the periodic table and having a cyclopentadienyl ring and an alkylaluminoxane; a catalyst containing a compound containing a transition metal element of group 4 of the periodic table and having a cyclopentadienyl ring, a compound that reacts with the compound to form an ionic complex, and an organic aluminum compound; and a catalyst in which a catalyst component (for example, a compound containing a transition metal element of group 4 of the periodic table and having a cyclopentadienyl ring, a compound that forms an ionic complex, or an organic aluminum compound) is supported on inorganic particles (for example, silica or clay minerals) and modified.

In addition, as the polymerization catalyst, a prepolymerization catalyst prepared by prepolymerizing a monomer such as ethylene or an α-olefin in the presence of the catalyst described above may be used.

Examples of Ziegler-Natta type catalyst include a catalyst in which a titanium-containing solid transition metal component and an organometallic component are combined.

Specific examples of the above polymerization catalyst include conventionally known catalysts described in JP-A-61-218606, JP-A-5-194685, JP-A-7-216017, JP-A-9-316147, JP-A-10-212319, and JP-A-2004-182981.

Examples of a polymerization method include bulk polymerization, solution polymerization, and gas phase polymerization. Here, the bulk polymerization refers to a method for performing polymerization using a liquid olefin as a medium at a polymerization temperature. The solution polymerization refers to a method for performing polymerization in an inert hydrocarbon solvent such as propane, butane, isobutane, pentane, hexane, heptane, or octane. The gas phase polymerization refers to a method for polymerizing a monomer in a gaseous state in a medium which is the monomer in a gaseous state.

Examples of a method in the above polymerization method (polymerization method) include a batch method, a continuous method, and a combination thereof. The polymerization method may be a multistage method performed using a plurality of polymerization reaction tanks connected in series.

As various conditions (polymerization temperature, polymerization pressure, monomer concentration, catalyst putting amount, polymerization time, and the like) in a polymerization step according to the above polymerization method, any suitable conditions can be appropriately determined according to an intended polypropylene-based polymer.

In producing the polypropylene-based polymer, in order to remove a residual solvent contained in the polypropylene-based polymer polymerized by the above polymerization method and an impurity such as an oligomer by-produced in the polymerization step, the polypropylene-based polymer polymerized by the above polymerization method may be held, for example, at a temperature at which a residual solvent or an impurity such as an oligomer can be volatilized and at a temperature at which the polypropylene-based polymer cannot be melted, modified, or the like. Examples of such a method for removing an impurity include any conventionally known suitable methods described in JP-A-55-75410 and JP-B2-2565753.

Hereinafter, the propylene homopolymer, the polypropylene-based random copolymer, and the heterophasic propylene polymerization material, each of which serves as the polypropylene-based polymer, will be described.

(Propylene homopolymer)

The propylene homopolymer has a limiting viscosity number [η] of preferably 0.1 to 2 dL/g, more preferably 0.5 to 1.9 dL/g, still more preferably 0.7 to 1.8 dL/g from a viewpoint of improving the fluidity of the polypropylene-based resin composition and the toughness of a molded product containing the polypropylene-based resin composition.

In addition, the propylene homopolymer has a molecular weight distribution Mw/Mn of preferably 3 or more and less than 7, more preferably 3 to 5 from a viewpoint of improving the fluidity of the polypropylene-based resin composition and the toughness of a molded product containing the polypropylene-based resin composition. Here, Mw represents a weight average molecular weight, and Mn represents a number average molecular weight. Note that the molecular weight distribution is a numerical value measured by gel permeation chromatography (GPC).

(Polypropylene-based random copolymer)

Examples of the polypropylene-based random copolymer include a random copolymer containing a propylene unit and an ethylene unit (hereinafter, referred to as a random copolymer (1)), a random copolymer containing a propylene unit and an α-olefin unit having 4 or more carbon atoms (hereinafter, referred to as a random copolymer (2)), and a random copolymer containing a propylene unit, an ethylene unit, and an α-olefin unit having 4 or more carbon atoms (hereinafter, referred to as a random copolymer (3)).

The α-olefin having 4 or more carbon atoms that can constitute the polypropylene-based random copolymer is preferably an α-olefin having 4 to 10 carbon atoms. Examples of the α-olefin having 4 to 10 carbon atoms include 1-butene, 1-pentene, 1-hexene, 4-methyl-1-pentene, 1-octene, and 1-decene. 1-Butene, 1-hexene, and 1-octene are preferable.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

The content of the ethylene unit in the random copolymer (1) is preferably 0.1 to 40 mass%, more preferably 0.1 to 30 mass%, and still more preferably 2 to 15 mass%.

The content of the $\alpha$-olefin unit having 4 or more carbon atoms in the random copolymer (2) is preferably 0.1 to 40 mass%, more preferably 0.1 to 30 mass%, and still more preferably 2 to 15 mass%.

The total content of the ethylene unit and the $\alpha$-olefin unit having 4 or more carbon atoms in the random copolymer (3) is preferably 0.1 to 40 mass%, more preferably 0.1 to 30 mass%, and still more preferably 2 to 15 mass%.

The content of the propylene unit in each of the random copolymers (1) to (3) is preferably 60 to 99.9 mass%, more preferably 70 to 99.9 mass%, and still more preferably 85 to 98 mass%.

(Heterophasic propylene polymerization material)

As described above, the polymer (I) that can be contained in the heterophasic propylene polymerization material is a polymer containing a propylene unit in an amount of more than 80 mass% and 100 mass% or less. The total content of the monomer units other than the propylene unit in the polymer (I) is usually 0 mass% or more and less than 20 mass%, and may be 0 mass% or 0.01 mass% or more.

Examples of the monomer unit other than the propylene unit which may be included in the polymer (I) include an ethylene unit and an $\alpha$-olefin unit having 4 or more carbon atoms.

The $\alpha$-olefin having 4 or more carbon atoms, capable of constituting the polymer (I) is preferably an $\alpha$-olefin having 4 to 10 carbon atoms, more preferably 1-butene, 1-hexene, or 1-octene, and still more preferably 1-butene.

Examples of the polymer (I) include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer.

Among these polymers, the polymer (I) is preferably a propylene homopolymer, a propylene-ethylene copolymer, a propylene-1-butene copolymer, or a propylene-ethylene-1-butene copolymer, and more preferably a propylene homopolymer from a viewpoint of the rigidity of a molded product containing the polypropylene-based resin composition.

The polymer (I) has a molecular weight distribution (Mw/Mn) of preferably 3 or more and less than 7, more preferably 3 to 5 as measured by GPC.

As described above, the polymer (II) is a copolymer of a propylene unit and at least one kind of monomer unit selected from the group consisting of an ethylene unit and an $\alpha$-olefin unit having 4 or more carbon atoms.

The total content of the ethylene unit and the $\alpha$-olefin unit having 4 or more carbon atoms in the polymer (II) is preferably 20 to 80 mass% and more preferably 20 to 60 mass%.

The $\alpha$-olefin having 4 or more carbon atoms, capable of constituting the polymer (II) is preferably an $\alpha$-olefin having 4 to 10 carbon atoms. Examples of the $\alpha$-olefin capable of constituting the polymer (II) include similar examples to the above-described examples of the $\alpha$-olefin capable of constituting the polymer (I).

Examples of the polymer (II) include a propylene-ethylene copolymer, a propylene-ethylene-1-butene copolymer, a propylene-ethylene-1-hexene copolymer, a propylene-ethylene-1-octene copolymer, a propylene-ethylene-1-decene copolymer, a propylene-1-butene copolymer, a propylene-1-hexene copolymer, a propylene-1-octene copolymer, and a propylene-1-decene copolymer. A propylene-ethylene copolymer, a propylene-1-butene copolymer, and a propylene-ethylene-1-butene copolymer are preferable. A propylene-ethylene copolymer is more preferable.

The content of the polymer (II) in the heterophasic propylene polymerization material is preferably 1 to 50 mass%, more preferably 1 to 40 mass%, still more preferably 5 to 30 mass%, and particularly preferably 8 to 15 mass% when the total content of the polymer (I) and the polymer (II) is 100 mass%.

Examples of the heterophasic propylene polymerization material include a combination of a propylene homopolymer and a (propylene-ethylene) copolymer, a combination of a propylene homopolymer and a (propylene-ethylene-1-butene) copolymer, a combination of a propylene homopolymer and a (propylene-ethylene-1-hexene) copolymer, a combination of a propylene homopolymer and a (propylene-ethylene-1-octene) copolymer, a combination of a propylene homopolymer and a (propylene-1-butene) copolymer, a combination of a propylene homopolymer and a (propylene-1-hexene) copolymer, a combination of a propylene homopolymer and a (propylene-1-octene) copolymer, and a combination of a propylene homopolymer and a (propylene-1-decene) copolymer, in which the polymer (I) is a propylene homopolymer.

Other examples of the heterophasic propylene polymerization material include a combination of a (propylene-ethylene) copolymer and a (propylene-ethylene) copolymer, a combination of a (propylene-ethylene) copolymer and a (propylene-ethylene-1-butene) copolymer, a combination of a (propylene-ethylene) copolymer and a (propylene-ethylene-1-hexene) copolymer, a combination of a (propylene-ethylene) copolymer and a (propylene-ethylene-1-octene) copolymer, a combination of a (propylene-ethylene) copolymer and a (propylene-ethylene-1-decene) copolymer, a combination of a (propylene-ethylene) copolymer and a (propylene-1-butene) copolymer, a combination of a (propylene-ethylene) copolymer and a (propylene-1-hexene) copolymer, a combination of a (propylene-ethylene) copolymer and a (propylene-1-octene) copolymer, a combination of a (propylene-ethylene) copolymer and a (propylene-1-decene) copolymer, a combination of a (propylene-1-butene) copolymer and a (propylene-ethylene) copolymer, a combination of a (propylene-1-butene) copolymer and a (propylene-ethylene-1-butene) copolymer, a combination of a (propylene-1-butene) copolymer and a (propylene-ethylene-1-hexene) copolymer, a combination of a (propylene-1-butene) copolymer and a (propylene-ethylene-1-octene) copolymer, a combination of a (propylene-1-butene) copolymer and a (propylene-ethylene-1-decene) copolymer, a combination of a (propylene-1-butene) copolymer and a (propylene-1-butene) copolymer, a combination of a (propylene-1-butene) copolymer and a (propylene-1-hexene) copolymer, a combination of a (propylene-1-butene) copolymer and a (propylene-1-octene) copolymer, a combination of a (propylene-1-butene) copolymer and a (propylene-1-decene) copolymer, a combination of a (propylene-1-hexene) copolymer and a (propylene-1-hexene) copolymer, a combination of a (propylene-1-hexene) copolymer and a (propylene-1-octene) copolymer, a combination of a (propylene-1-hexene) copolymer and a (propylene-1-decene) copolymer, a combination of a (propylene-1-octene) copolymer and a (propylene-1-octene) copolymer, and a combination of a (propylene-1-octene) copolymer and a (propylene-1-decene) copolymer, in which the polymer (I) is a polymer containing a propylene unit and a monomer unit other than the propylene unit. Note that, in the examples of the above combination, the polymer (I) is described first, and the polymer (II) is described later.

The heterophasic propylene polymerization material that can be contained in the polypropylene-based resin composition is preferably a combination of a propylene homopolymer and a (propylene-ethylene) copolymer, a combination of a propylene homopolymer and a (propylene-ethylene-1-butene) copolymer, a combination of a (propylene-ethylene) copolymer and a (propylene-ethylene) copolymer, a combination of a (propylene-ethylene) copolymer and a (propylene-ethylene-1-butene) copolymer, or a combination of a (propylene-1-butene) copolymer and a (propylene-1-butene) copolymer, and more preferably a combination of a propylene homopolymer and a (propylene-ethylene) copolymer.

The heterophasic propylene polymerization material can be produced by a production method including a multistage polymerization step including a first polymerization step of generating the polymer (I) and a second polymerization step of generating the polymer (II) in the presence of the polymer (I) generated in the first polymerization step. Polymerization of the heterophasic propylene polymerization material can be performed using the catalyst exemplified as the above-described catalyst that can be used for producing the polypropylene-based polymer.

The limiting viscosity number (hereinafter, referred to as $[\eta]I$) of the polymer (I) is preferably 0.1 to 2 dL/g, more preferably 0.5 to 1.5 dL/g, and still more preferably 0.7 to 1.3 dL/g.

The limiting viscosity number (hereinafter, referred to as $[\eta]II$) of the polymer (II) is preferably 1 to 10 dL/g, more preferably 2 to 10 dL/g, and still more preferably 5 to 8 dL/g.

A ratio of $[\eta]II$ to $[\eta]I$ ($[\eta]II/[\eta]I$) is preferably 1 to 20, more preferably 2 to 10, and still more preferably 2 to 9.

When the polypropylene-based polymer is a heterophasic propylene polymerization material containing the polymer (I) and the polymer (II) formed by the multistage polymerization step as described above, a part of the polymer (I) generated in the first polymerization step is extracted from a polymerization tank in which the first polymerization step has been performed, the limiting viscosity number thereof is determined, the limiting viscosity number (referred to as $[\eta]Total$) of the heterophasic propylene polymerization material finally generated in the second polymerization step is determined, and the limiting viscosity number of the polymer (II) generated in the second polymerization step is calculated using these limiting viscosity numbers and the contents.

In addition, when the heterophasic propylene polymerization material containing the polymer (I) and the polymer (II) is produced by a production method in which the polymer (I) is obtained in the first polymerization step and the polymer (II) is obtained in the second polymerization step, the content of each of the polymer (I) and the polymer (II) and a procedure of measuring and calculating the limiting viscosity numbers ($[\eta]Total$, $[\eta]I$, and $[\eta]II$) are as follows.

From the limiting viscosity number ($[\eta]I$) of the polymer (I) obtained in the first polymerization step, the limiting viscosity number ($[\eta]Total$) measured by the method described above for the final polymer (that is, the heterophasic propylene polymerization material containing the polymer (I) and the polymer (II)) obtained in the second polymerization step, and the content of the polymer (II) contained in the final polymer, the limiting viscosity number $[\eta]II$ of the polymer (II) is calculated by the following formula.

$$\text{Formula: } [\eta]II = ([\eta]Total - [\eta]I \times XI)/XII$$

in which

$[\eta]Total$ represents the limiting viscosity number (unit: dL/g) of the final polymer,
$[\eta]I$ represents the limiting viscosity number (unit: dL/g) of the polymer (I),
XI represents a weight ratio of the polymer (I) to the final polymer, and

XII represents a weight ratio of the polymer (II) to the final polymer.

Note that XI and XII can be determined from a mass balance in the polymerization step.

Here, the weight ratio XII of the polymer (II) to the final polymer may be calculated by the following formula using the crystal melting heat amount of each of the polymer (I) and the final polymer.

$$\text{Formula: } XII = 1 - (\Delta Hf)T/(\Delta Hf)P$$

in which

$(\Delta Hf)T$ represents the melting heat amount (unit: cal/g) of the final polymer (polymer (I) and polymer (II)),
$(\Delta Hf)P$ represents the melting heat amount (unit: cal/g) of the polymer (I).

(Content of component (A): polypropylene-based polymer)

The content of the component (A): polypropylene-based polymer in the polypropylene-based resin composition is 40 to 90 mass%, preferably 50 mass% or more, and preferably 80 mass% or less when the total amount of the polypropylene-based resin composition is 100 mass%.

(2) Component (B): acid-modified polypropylene-based polymer

The polypropylene-based resin composition of the present embodiment contains the component (B): acid-modified polypropylene-based polymer in addition to the component (A): polypropylene-based polymer.

Here, the acid-modified polypropylene-based polymer means a polymer obtained by modifying a polypropylene-based polymer with an unsaturated carboxylic acid and/or an unsaturated carboxylic acid derivative.

The polypropylene-based polymer to be modified is a polymer containing a propylene unit in an amount of more than 50 mass% with respect to all constituent units of the polypropylene-based polymer. The content of the propylene unit in the polypropylene-based polymer is usually 100 mass% or less. Examples of the polypropylene-based polymer to be acid-modified include those exemplified above in the description of the component (A): polypropylene-based polymer.

The acid-modified polypropylene-based polymer is usually a polymer having a partial structure of a polypropylene-based polymer and a partial structure derived from an unsaturated carboxylic acid and/or an unsaturated carboxylic acid derivative.

Examples of the acid-modified polypropylene-based polymer include: (a) an acid-modified polypropylene-based polymer obtained by graft-polymerizing an unsaturated carboxylic acid and/or an unsaturated carboxylic acid derivative with a propylene homopolymer; (b) an acid-modified polypropylene-based polymer obtained by graft-polymerizing an unsaturated carboxylic acid and/or an unsaturated carboxylic acid derivative with a copolymer obtained by copolymerizing propylene and one or more monomers selected from the group consisting of ethylene and an α-olefin having 4 or more carbon atoms; and (c) an acid-modified polypropylene-based polymer obtained by graft-polymerizing an unsaturated carboxylic acid and/or an unsaturated carboxylic acid derivative with a heterophasic propylene polymerization material.

As the acid-modified polypropylene-based polymer, one kind of polymer may be used alone, or two or more kinds of polymers may be used in combination at any ratio.

Examples of the unsaturated carboxylic acid include maleic acid, fumaric acid, itaconic acid, acrylic acid, and methacrylic acid.

Examples of the unsaturated carboxylic acid derivative include an acid anhydride of an unsaturated carboxylic acid, an ester compound thereof, an amide compound thereof, an imide compound thereof, and a metal salt thereof.

Specific examples of the unsaturated carboxylic acid derivative include maleic anhydride, itaconic anhydride, methyl acrylate, ethyl acrylate, butyl acrylate, methyl methacrylate, ethyl methacrylate, butyl methacrylate, 2-hydroxyethyl methacrylate, a maleic acid monoethyl ester, a maleic acid diethyl ester, a fumaric acid monomethyl ester, a fumaric acid dimethyl ester, acrylamide, methacrylamide, maleic acid monoamide, maleic acid diamide, fumaric acid monoamide, maleimide, N-butyl maleimide, and sodium methacrylate.

As the unsaturated carboxylic acid, maleic acid and acrylic acid are preferable. As the unsaturated carboxylic acid derivative, maleic anhydride and 2-hydroxyethyl methacrylate are preferable, and maleic anhydride is more preferable.

In other words, the component (B): acid-modified polypropylene is preferably maleic acid-modified polypropylene, acrylic acid-modified polypropylene, maleic anhydride-modified polypropylene, or 2-hydroxyethyl methacrylate polypropylene.

The acid-modified polypropylene-based polymer has a melt flow rate of preferably 300 g/10 min or less, more preferably 5 to 300 g/10 min, still more preferably 10 to 200 g/10 min, further still more preferably 20 to 170 g/10 min from a viewpoint of improving the wet-heat resistance (wet-heat resistance strength retention) of the molded product, improving the strength (weld strength), and further improving the stability of production of the molded product.

As the acid-modified polypropylene-based polymer, the acid-modified polypropylene-based polymer according to (a) is preferable.

The acid-modified polypropylene-based polymer is preferably an acid-modified polyolefin-based polymer obtained by graft-polymerizing maleic anhydride with a polyolefin-based polymer containing a propylene unit in an amount of more than 50 mass% in all constituent units.

The total graft amount of the unsaturated carboxylic acid unit and the unsaturated carboxylic acid derivative unit in the acid-modified polypropylene-based polymer is preferably 0.1 mass% to 20 mass%, more preferably 0.1 mass% to 10 mass%, and still more preferably 0.3 mass% to 10 mass% when the amount of the acid-modified polypropylene-based polymer is 100 mass% from a viewpoint of improving the strength of the molded product obtained by molding the polypropylene-based resin composition of the present embodiment. In an aspect, the total graft amount of the unsaturated carboxylic acid unit and the unsaturated carboxylic acid derivative unit in the acid-modified polypropylene-based polymer is preferably 0.2 mass% to 1 mass%, and more preferably 0.3 mass% to 0.6 mass%.

Here, when the acid-modified polypropylene-based polymer contains only one of the unsaturated carboxylic acid unit and the unsaturated carboxylic acid derivative unit, the total graft amount of the unsaturated carboxylic acid unit and the unsaturated carboxylic acid derivative unit means the graft amount of only one of the units.

Note that the graft amount of the unsaturated carboxylic acid unit and the unsaturated carboxylic acid derivative unit means $X1$ described later.

The acid-modified polypropylene-based polymer is preferably an acid-modified polypropylene having a total graft amount of an unsaturated carboxylic acid unit and an unsaturated carboxylic acid derivative unit of 0.3 mass% or more and a melt flow rate of 300 g/10 min or less as measured under conditions of a temperature of 230°C and a load of 2.16 kgf from a viewpoint of the strength (weld strength) of the molded product. As an aspect, the acid-modified polypropylene-based polymer may be an acid-modified polypropylene having a graft amount of a maleic anhydride unit of 0.3 mass% or more and a melt flow rate of 300 g/10 min or less as measured under conditions of a temperature of 230°C and a load of 2.16 kgf.

The unsaturated carboxylic acid and/or the unsaturated carboxylic acid derivative of the acid-modified polypropylene-based polymer preferably has a graft efficiency of 51% or more from a viewpoint of improving the rigidity and the impact strength of a molded product obtained by molding the polypropylene-based resin composition of the present embodiment. An upper limit of the graft efficiency is 90% or less as an aspect, and 75% or less as an aspect.

The "graft efficiency of the acid-modified polypropylene-based polymer" means a "ratio of the amount of an unsaturated carboxylic acid and/or an unsaturated carboxylic acid derivative chemically bonded to the acid-modified polypropylene-based polymer to the total amount of the unsaturated carboxylic acid and/or the unsaturated carboxylic acid derivative chemically bonded to the acid-modified polypropylene-based polymer and an unsaturated carboxylic acid and/or an unsaturated carboxylic acid derivative not chemically bonded to the acid-modified polypropylene-based polymer contained in the acid-modified polypropylene-based polymer".

The total graft amount $X1$ of the unsaturated carboxylic acid and/or the unsaturated carboxylic acid derivative in the acid-modified polypropylene-based polymer and the graft efficiency can be determined by the following procedure.

(1) 1.0 g of the acid-modified polypropylene-based polymer and 100 mL of xylene are mixed, and refluxed and dissolved.

(2) The resulting xylene solution is added dropwise to 300 mL of acetone under stirring to reprecipitate the acid-modified polypropylene-based polymer.

(3) The reprecipitated acid-modified polypropylene-based polymer is collected.

(4) The collected acid-modified polypropylene-based polymer is vacuum-dried at 70°C for four hours or more to obtain a purified acid-modified polypropylene-based polymer.

(5) The purified acid-modified polypropylene-based polymer is hot-pressed to form a film having a thickness of about 100 um.

(6) 0.5 g of the formed film is put in 100 mL of xylene, and refluxed and dissolved.

(7) Immediately after the xylene solution is obtained, one or two drops of a phenolphthalein indicator is added to the xylene solution, the resulting solution is titrated with a sodium hydroxide methanol solution adjusted to 0.01 mol/L, and an intermediate point between light pink and deep pink in color of the solution is defined as an equivalence point A.

Subsequently, a blank test is performed according to the following procedure.

(8) 100 mL of xylene is attached to a reflux apparatus and refluxed for one hour.

(9) Immediately after the xylene solution is obtained, one or two drops of a phenolphthalein indicator is added to the xylene solution, the resulting solution is titrated with the same sodium hydroxide methanol solution (0.01 mol/L) as described above, and an intermediate point between light pink and deep pink in color of the solution is defined as an equivalence point A'.

Next, the amount X1 of the unsaturated carboxylic acid and/or unsaturated carboxylic acid derivative contained in the purified acid-modified polypropylene-based polymer is calculated according to the following formula (1) (since the calculated X1 represents the content of the unsaturated carboxylic acid and/or the unsaturated carboxylic acid derivative reacted with the polypropylene-based polymer, X1 is referred to as a graft amount).

$$\text{Formula (1): Graft amount X1 (mass\%) of unsaturated}$$

$$\text{carboxylic acid and/or unsaturated carboxylic acid}$$

$$\text{derivative} = (0.00049 \times (a - a')/W) \times 100$$

In formula (1),

a represents a dropping amount (mL) at the equivalence point A,
a' represents a dropping amount (mL) at the equivalence point A', and
W represents the mass (g) of the film of the procedure (6).

Subsequently, the polypropylene-based polymer that has not been purified is treated similarly to the above procedures (5) to (9), and the content X2 of the unsaturated carboxylic acid and/or the unsaturated carboxylic acid derivative in the acid-modified polypropylene-based polymer that has not been purified is calculated (X2 is a sum of the content (X1) of the unsaturated carboxylic acid and/or unsaturated carboxylic acid derivative reacted with the polypropylene-based polymer and the content of the unsaturated carboxylic acid and/or unsaturated carboxylic acid derivative not reacted with the polypropylene-based polymer, that is, the free unsaturated carboxylic acid and/or unsaturated carboxylic acid derivative).

(10) The calculated X1 and X2 are applied to the following formula to calculate the graft efficiency.

$$\text{Formula: Graft efficiency (\%)} = X1/X2 \times 100$$

(Content of component (B): acid-modified polypropylene-based polymer)

The content of the component (B): acid-modified polypropylene-based polymer in the polypropylene-based resin composition is 0.1 to 10 mass%, preferably 0.5 mass% or more, and preferably 5 mass% or less when the total amount of the polypropylene-based resin composition is 100 mass%.

(3) Component (C): glass fiber

In the present embodiment, the component (C): glass fiber preferably has an acidic functional group content of less than 0.01 mmol/g from a viewpoint of improving the wet-heat resistance (wet-heat resistance strength retention) of the molded product.
Here, a method for measuring the acidic functional group content in the glass fiber will be described.
The acidic functional group content of the glass fiber can be determined by a conventionally known acid-base titration method.
Specifically, for example, first, a hydrochloric acid aqueous solution is added dropwise to a supernatant obtained by treating a freeze-pulverized glass fiber as a sample with a sodium hydroxide aqueous solution, and the resulting solution is titrated to detect an equivalence point based on a potential change ($\Delta E/\Delta V$) per dropping amount, whereby the acidic functional group content (mmol/g) in the sample can be calculated.
More specifically, 30 mL of a sodium hydroxide aqueous solution (0.05 mol/L) is added to 1 g of the freeze-pulverized sample, and the resulting mixture is vertically shaken for four hours using a shaker, and then left for a while.
Thereafter, the obtained supernatant is filtered using a syringe filter, a 0.05 mol/L hydrochloric acid standard solution is added dropwise to 15 mL of the obtained filtrate, the resulting solution is titrated, and a point at which a potential change ($\Delta E/\Delta V$) per dropping amount is maximum is defined as the equivalence point A.
In addition, as a blank test, a 0.05 mol/L hydrochloric acid standard solution is added dropwise to 15 mL of a sodium hydroxide aqueous solution (0.05 mol/L), and a point at which a potential change ($\Delta E/\Delta V$) per dropping amount is maximum is defined as an equivalence point B.

Using the values obtained as described above, the acidic functional group content (mmol/g) was calculated by the following formula (2).

$$\texttt{Formula (2): Acidic functional group content (mmol/g)}$$

$$\texttt{= (B - A)} \times \texttt{0.05} \times \texttt{(30/15)/S}$$

In formula (2),

A represents a titration amount (mL) of hydrochloric acid at the equivalence point A,
B represents a titration amount (mL) of hydrochloric acid at the equivalence point B, and
S represents the mass (g) of the sample.

In the present embodiment, the component (C): glass fiber is a glass fiber having a water-soluble base component content of 0.1 mmol/g or less and a water-soluble weak acid salt content of 0.1 mmol/g or less from a viewpoint of improving the wet-heat resistance of the molded product.

The water-soluble base component content in the glass fiber is preferably 0.08 mmol/g or less, more preferably 0.05 mmol/g or less, and still more preferably 0.04 mmol/g or less.

The water-soluble weak acid salt content in the glass fiber is preferably 0.06 mmol/g or less, and more preferably 0.04 mmol/g or less.

Here, a method for measuring the water-soluble base component content and the water-soluble weak acid salt content in the glass fiber will be described.

The water-soluble base component content and the water-soluble weak acid salt content in the glass fiber can be basically measured in a similar manner to the method for measuring the acidic functional group content described above.

Specifically, first, a sample is prepared in a similar manner to the method for measuring the acidic functional group content. Subsequently, a sodium hydroxide aqueous solution is added dropwise to a supernatant obtained by treating the sample with a hydrochloric acid aqueous solution, and the resulting solution is titrated to detect an equivalence point based on a potential change ($\Delta E/\Delta V$) per dropping amount, whereby the water-soluble base component content or the water-soluble weak acid salt content (mmol/g) in the sample can be calculated.

More specifically, 30 mL of a hydrochloric acid aqueous solution (0.05 mol/L) is added to 1 g of the freeze-pulverized sample, and the resulting mixture is vertically shaken for four hours using a shaker, and then left for a while.

Thereafter, the obtained supernatant is filtered using a syringe filter, a 0.05 mol/L sodium hydroxide aqueous solution is added dropwise to 15 mL of the obtained filtrate, and points at which a potential change ($\Delta E/\Delta V$) per dropping amount is maximum are defined as an equivalence point C1 and an equivalence point C2 in descending order of dropping amount.

In addition, as a blank test, a 0.05 mol/L sodium hydroxide aqueous solution is added dropwise to 15 mL of a hydrochloric acid aqueous solution (0.05 mol/L), and a point at which a potential change ($\Delta E/\Delta V$) per dropping amount is maximum is defined as an equivalence point D.

Then, the water-soluble base component content (mmol/g) was calculated by the following formula (3).

$$\texttt{Formula (3): Water-soluble base component content}$$

$$\texttt{(mmol/g)}$$

$$\texttt{= (d - c1)} \times \texttt{0.05} \times \texttt{(30/15)/S}$$

In formula (3),

d represents a titration amount (mL) of the sodium hydroxide aqueous solution at the equivalence point D,
c1 represents a titration amount (mL) of the sodium hydroxide aqueous solution at the equivalence point C1, and
S represents the mass (g) of the sample.

Note that when only one equivalence point C appears in the above titration operation, the water-soluble weak acid salt content is 0 mmol/g. When two equivalence points C (equivalence points C1 and C2) appear, the water-soluble weak acid salt content (mmol/g) is calculated by the following formula (4).

$$\text{Formula (4): Water-soluble weak acid salt content (mmol/g)}$$

$$= (c1 - c2) \times 0.05 \times (30/15)/S$$

In formula (4),

c1 represents a titration amount (mL) of the sodium hydroxide aqueous solution at the equivalence point C1,
c2 represents a titration amount (mL) of the sodium hydroxide aqueous solution at the equivalence point C2 (here, c1 > c2), and
S represents the mass (g) of the sample.

The acidic functional group content, the water-soluble base component content, and the water-soluble weak acid salt content in the glass fiber can be measured using, for example, any conventionally known suitable potentiometric automatic titrator.

In the present embodiment, the component (C): glass fiber is preferably a glass fiber having a total nitrogen content of 70 ppm or more as measured by a chemiluminescence method from a viewpoint of further improving strength (weld strength) in addition to improving the wet-heat resistance (wet-heat resistance strength retention) of the molded product.

Specifically, the total nitrogen content in the glass fiber as measured by a chemiluminescence method is preferably 70 ppm or more, more preferably 100 ppm or more, still more preferably 120 ppm or more, and particularly preferably 130 ppm or more.

Here, a method for measuring the total nitrogen content in the glass fiber by a chemiluminescence method will be briefly described.

The total nitrogen content in the glass fiber can be measured using any conventionally known suitable analyzer in accordance with the method defined in JIS K 2609.

Specifically, first, a sample which is a glass fiber is heated in an inert gas atmosphere. Then, a nitrogen compound in the sample is thermally decomposed to generate a nitrogen monoxide gas. Then, when the generated nitrogen monoxide gas is reacted with ozone, chemiluminescence is generated, and thus the intensity of the chemiluminescence is detected. The detected intensity of the chemiluminescence is proportional to the concentration of nitrogen monoxide. Therefore, the total nitrogen content (ppm) in the sample can be calculated using a calibration curve of a standard sample created in advance.

Examples of an analyzer that can be used for measuring the total nitrogen content in the glass fiber include a trace total nitrogen analyzer TN-2100H (trade name, manufactured by Nitto Seiko Analytech Co., Ltd.).

The fiber diameter of the component (C): glass fiber contained in the polypropylene-based resin composition of the present embodiment is not particularly limited, but is usually 3 to 25 um. The fiber length of the component (C): glass fiber is not particularly limited, but is usually 0.1 to 20 mm.

As the component (C): glass fiber contained in the polypropylene-based resin composition, one kind of glass fiber may be used alone, or two or more kinds of glass fibers may be used in combination at any ratio.

A material of the glass fiber is not particularly limited, and any conventionally known suitable glass can be used as the material. Examples of the material of the glass fiber include E glass (alkali-free glass), A glass, C glass, S glass, and D glass. Among these materials, E glass is preferable as the material of the glass fiber. A method for producing the glass fiber is not particularly limited, and as the glass fiber, a glass fiber produced by any conventionally known suitable production method can be used.

The glass fiber may be treated with a binder and/or a surface treatment agent.

The glass fiber is preferably surface-treated with a surface treatment agent from a viewpoint of improving dispersibility in the component (A): polypropylene-based polymer. Examples of surface treatment agent include an organosilane coupling agent, a titanate coupling agent, an aluminate coupling agent, a zirconate coupling agent, a silicone compound, a higher fatty acid, a fatty acid metal salt, and a fatty acid ester.

Examples of the organosilane coupling agent include vinyltrimethoxysilane, γ-chloropropyltrimethoxysilane, γ-methacryloxypropyltrimethoxysilane, γ-aminopropyltrimethoxysilane, and 3-acryloxypropyltrimethoxysilane.

Examples of the titanate coupling agent include isopropyl triisostearoyl titanate, isopropyl tris(dioctyl pyrophosphate) titanate, and isopropyl tri(N-aminoethyl) titanate.

Examples of the aluminate coupling agent include acetoalkoxyaluminum diisopropylate.

Examples of the zirconate coupling agent include tetra(2,2-diallyloxymethyl) butyl, di(tridecyl) phosphite zirconate, and neopentyl (diallyl) oxytrineodecanoyl zirconate.

Examples of the silicone compound include a silicone oil and a silicone resin.

Examples of the higher fatty acid include oleic acid, capric acid, lauric acid, palmitic acid, stearic acid, montanic acid, linoleic acid, rosin acid, linolenic acid, undecanoic acid, and undecenoic acid.

Examples of the higher fatty acid metal salt include a sodium salt of a fatty acid having 9 or more carbon atoms (for example, stearic acid or montanic acid), a lithium salt thereof, a calcium salt thereof, a magnesium salt thereof, a zinc salt thereof, and an aluminum salt thereof. Among these salts, calcium stearate, aluminum stearate, calcium montanate, and sodium montanate are preferable.

Examples of the fatty acid ester include a polyhydric alcohol fatty acid ester such as a glycerin fatty acid ester, an alpha sulfo fatty acid ester, a polyoxyethylene sorbitan fatty acid ester, a sorbitan fatty acid ester, a polyethylene fatty acid ester, and a sucrose fatty acid ester.

The use amount of the surface treatment agent is not particularly limited. The use amount of the surface treatment agent can be preferably 0.01 parts by weight to 5 parts by weight, and more preferably 0.1 parts by weight to 3 parts by weight with respect to 100 parts by weight of the glass fiber.

The glass fiber may be treated with a binder. The glass fibers can be bound by treatment with the binder.

Examples of the binder include an epoxy-based binder, an aromatic urethane-based binder, an aliphatic urethane-based binder, an acrylic binder, and a maleic anhydride-modified polyolefin-based binder.

The binder is preferably a convergence agent that melts at a temperature in the polypropylene-based resin composition producing step, and more preferably a convergence agent that melts at 200°C or lower.

As the glass fiber, a so-called chopped strand obtained by cutting a glass strand may be used. A chopped strand is preferably used as the glass fiber from a viewpoint of further improving the rigidity of the molded product containing the polypropylene-based resin composition and further improving the impact strength.

As the glass fiber, a resin pellet containing a glass fiber (glass fiber-containing resin pellet) may be used. In such a glass fiber-containing pellet, usually, the length (fiber length) of the glass fiber approximately coincides with the length of the glass fiber-containing resin pellet in an extrusion direction.

The glass fiber-containing resin pellet can be produced by any conventionally known suitable production method using any conventionally known suitable resin selected in consideration of the composition of the polypropylene-based resin composition to be produced and the like.

The glass fiber-containing resin pellet can be produced by, for example, a pultrusion molding method. The pultrusion molding method is a method for melt-extruding any conventionally known suitable resin which is a material of a glass fiber-containing resin pellet from an extruder while a plurality of continuous glass fibers are drawn out to immerse a bundle of the glass fibers in the resin, cooling the bundle of the glass fibers immersed in the resin, and cutting the bundle of the glass fibers by a pelletizer to integrate the bundle of the plurality of glass fibers.

The content of the glass fiber in the glass fiber-containing resin pellet is preferably 50 to 99.9 mass%.

As the glass fiber, a glass fiber having a water-soluble base component content of 0.1 mmol/g or less and a water-soluble weak acid salt content of 0.1 mmol/g or less can be selected from commercially available products and used. Specific examples of the commercially available product include "CS-249A-10C" (trade name, manufactured by Owens Corning Co., Ltd.) and "ECS10-03-508H" (trade name, manufactured by JUSHI JAPAN CO.,LTD.).

The content of the component (C): glass fiber in the polypropylene-based resin composition is 10 to 60 mass%, preferably 15 mass% or more, more preferably 25 mass% or more, and preferably 55 mass% or less when the total amount of the polypropylene-based resin composition is 100 mass%.

(4) Component (D): nucleating agent

The polypropylene-based resin composition of the present embodiment may further contain a component (D): nucleating agent in addition to the components (A) to (C). By inclusion of the component (D): nucleating agent in the polypropylene-based resin composition, the weld strength can be increased.

As the nucleating agent, any conventionally known suitable nucleating agent can be used. Examples of the nucleating agent include a sorbitol-based nucleating agent, a phosphoric acid ester metal salt-based nucleating agent, a carboxylic acid metal salt-based nucleating agent, and a rosin-based nucleating agent. Examples of the carboxylic acid metal salt-based nucleating agent include hydroxy-di(p-tert-butylbenzoic acid) aluminum.

As the hydroxy-di(p-tert-butylbenzoic acid) aluminum which is a nucleating agent, for example, commercially available "AL-PTBBA" manufactured by NICEM can be used.

The addition amount of the component (D): nucleating agent is preferably 0.01 parts by mass or more, more preferably 0.05 parts by mass or more, preferably 3 parts by mass or less, more preferably 1 part by mass or less, and preferably 0.05 to 1 part by mass with respect to 100 parts by mass when the total amount of the components (A) to (C) described above is 100 parts by mass.

(5) Optional component

The polypropylene-based resin composition of the present embodiment may further contain an optional component in addition to the components (A) to (C) described above and the component (D) that can be optionally contained.

Examples of such an optional component include a flame retardant, an elastomer, a neutralizer, an antioxidant, an ultraviolet absorber, a lubricant, an antistatic agent, an antiblocking agent, a processing aid, an organic peroxide, a colorant (an inorganic pigment, an organic pigment, or the like), a pigment dispersant, a foaming agent, a foaming nucleating agent, a plasticizer, a crosslinking agent, a crosslinking aid, a brightening agent, an antibacterial agent, a light diffusing agent, and a molecular weight adjusting agent.

The polypropylene-based resin composition of the present embodiment may contain one kind selected from these optional components alone, or may contain two or more kinds selected from these optional components in combination at any ratio.

Examples of the flame retardant which is an optional component that can be contained in the polypropylene-based resin composition include a metal oxide, a polyvalent hydroxy group-containing compound, and a phosphorus-containing flame retardant.

Examples of the metal oxide include zinc oxide, magnesium oxide, calcium oxide, silicon dioxide, titanium oxide, manganese oxide ($MnO$ or $MnO_2$), iron oxide ($FeO$, $Fe_2O_3$, or $Fe_3O_4$), copper oxide, nickel oxide, tin oxide, aluminum oxide, and calcium aluminate. As the metal oxide, zinc oxide, magnesium oxide, and calcium oxide are preferable, and zinc oxide is more preferable. The metal oxide may be surface-treated.

Examples of commercially available zinc oxide include type II zinc oxide manufactured by Seido Chemical Industry Co., Ltd., type I zinc oxide manufactured by Mitsui Mining & Smelting Corporation, partially coated zinc oxide manufactured by Mitsui Mining & Smelting Corporation, NanoFine 50 (ultrafine zinc oxide having an average particle diameter of 0.02 um, manufactured by SAKAI CHEMICAL INDUSTRY CO., LTD.), and NanoFine K (ultrafine zinc oxide coated with zinc silicate having an average particle diameter of 0.02 um, manufactured by SAKAI CHEMICAL INDUSTRY CO., LTD.).

The polyvalent hydroxy group-containing compound is a compound having two or more hydroxy groups. Examples of the polyvalent hydroxy group-containing compound include pentaerythritol, dipentaerythritol, tripentaerythritol, polypentaerythritol having a degree of condensation of 4 or more, trishydroxyethyl isocyanate, polyethylene glycol, glycerin, starch, glucose, cellulose, and sorbitol. As the polyhydric hydroxy group-containing compound, a polyhydric alcohol compound is preferable because the polyhydric alcohol compound has low water solubility and low hygroscopicity. Pentaerythritol, dipentaerythritol, tripentaerythritol, or polypentaerythritol is more preferable, and pentaerythritol is still more preferable.

Examples of the elastomer that can be contained in the polypropylene-based resin composition include a random copolymer having an ethylene unit and an α-olefin unit having 4 to 10 carbon atoms. The random copolymer preferably has a melt flow rate of 0.1 to 50 g/10 min as measured in accordance with JIS K7210 under conditions of 230°C and a load of 2.16 kgf.

Examples of the α-olefin having 4 to 10 carbon atoms, constituting the random copolymer that is an elastomer include an α-olefin similar to the α-olefin having 4 to 10 carbon atoms, capable of constituting the component (A): polypropylene-based polymer. Specific examples of the α-olefin include an α-olefin having a chain structure, such as 1-butene, 1-pentene, 1-hexene, 4-methyl-1-pentene, 1-octene, or 1-decene, and an α-olefin having a cyclic structure, such as vinylcyclopropane or vinylcyclobutane. As the α-olefin, 1-butene, 1-hexene, and 1-octene are preferable.

Examples of the random copolymer that is an elastomer include an ethylene-1-butene random copolymer, an ethylene-1-hexene random copolymer, an ethylene-1-octene random copolymer, an ethylene-1-decene random copolymer, an ethylene-(3-methyl-1-butene) random copolymer, and a copolymer of ethylene and an α-olefin having a cyclic structure.

The content of the α-olefin in the random copolymer is preferably 1 to 49 mass%, more preferably 5 to 49 mass%, and still more preferably 24 to 49 mass% when the total weight of the random copolymer is 100 mass%.

The density of the random copolymer is preferably 0.850 to 0.890 g/cm3, more preferably 0.850 to 0.880 g/cm3, and still more preferably 0.855 to 0.867 g/cm$^3$ from a viewpoint of improving the impact resistance of the molded product.

The random copolymer which is an elastomer can be produced by polymerizing a monomer using a polymerization catalyst. Examples of the polymerization catalyst include the catalysts exemplified as the polymerization catalyst for producing the polypropylene-based polymer described above.

As the random copolymer, a commercially available product may be used. Examples of the commercially available product of the random copolymer which is an elastomer include ENGAGE (registered trademark) manufactured by Dow Chemical Japan Co., Ltd., TAFMER (registered trademark) manufactured by Mitsui Chemicals, Inc., NEO-ZEX (registered trademark) and ULTZEX (registered trademark) manufactured by Prime Polymer Co., Ltd., and EXCELLENE FX (registered trademark), SUMIKATHENE (registered trademark), and ESPRENE SPO (registered trademark) manufactured by Sumitomo Chemical Co., Ltd.

The addition amount of the elastomer is preferably 0 to 100 parts by mass, and more preferably 0 to 50 parts by mass with respect to 100 parts by mass when the total amount of the components (A) to (C) described above is 100 parts by mass.

The molecular weight adjusting agent is a component capable of adjusting the molecular weight of the component (A): polypropylene-based polymer in the polypropylene-based resin composition. Examples of the molecular weight adjusting agent include an organic peroxide. As the molecular weight adjusting agent, a molecular weight adjusting agent in a form of a so-called masterbatch, diluted with any conventionally known resin may be used.

3. Method for producing polypropylene-based resin composition

The polypropylene-based resin composition of the present embodiment can be produced by any conventionally known suitable production method.

The polypropylene-based resin composition of the present embodiment can be produced by kneading the component (A): polypropylene-based polymer, the component (B): acid-modified polypropylene-based polymer, and the component (C): glass fiber that have been described above, and the optional component to be added as necessary that has been described above using any conventionally known suitable commercially available twin-screw kneading extruder equipped with a cylinder and two screws.

Examples of a twin-screw kneading extruder that can be used include a twin-screw kneading extruder equipped with a side feeder.

In production of the polypropylene-based resin composition of the present embodiment, for example, when a component whose outer shape is easily deformed (easily broken) by kneading of the component (B): glass fiber or the like, in which such deformation is disadvantageous, is used, such a component may be separately side-fed using a side feeder and put in the twin-screw kneading extruder at a delayed timing. In this way, for example, breakage of the glass fiber contained in the polypropylene-based resin composition can be suppressed, and favorable performance can be exhibited.

4. Molded product (injection molded product) and method for producing molded product

The molded product of the present embodiment is preferably an injection molded product, and is a molded product containing the polypropylene-based resin composition of the present embodiment described above and obtained by molding the polypropylene-based resin composition of the present embodiment.

Since the molded product of the present embodiment contains the polypropylene-based resin composition described above, the molded product has excellent wet-heat resistance (wet-heat resistance strength retention), and as described above, the molded product can be particularly suitably used as materials for interior and exterior parts for an automobile and parts in an engine room.

Examples of a method for producing the molded product of the present embodiment include, in addition to a general injection molding method, an injection foam molding method, a supercritical injection foam molding method, an ultrahigh-speed injection molding method, an injection compression molding method, a gas-assisted injection molding method, a sandwich molding method, a sandwich foam molding method, and an insert outsert molding method.

The shape and dimension of the molded product of the present embodiment are not particularly limited. The molded product (injection molded product) of the present embodiment can be produced by the above-described production method so as to have any suitable shape and dimension corresponding to the use described above.

5. Physical properties of molded product

(1) Tensile strength

The tensile strength of the molded product of the present embodiment can be measured by a method in accordance with JIS K7161 (details of the measurement method will be described later).

(2) Wet-heat resistance strength retention

The wet-heat resistance strength retention of the molded product of the present embodiment can be calculated by performing an accelerated degradation test in which the molded product is held under a predetermined severe condition for a predetermined time, and comparing the initial tensile strength of the molded product with the tensile strength after the accelerated degradation test (details of the calculation method will be described later).

The wet-heat resistance strength retention of the molded product of the present embodiment is preferably 95% or more, and more preferably 98% or more.

(3) Weld tensile strength

The weld tensile strength of the molded product of the present embodiment can be measured using an evaluation dumbbell molded based on ASTMD635 (details of the measurement method will be described later).

[Examples]

Hereinafter, the present invention will be described more specifically with reference to Examples and Comparative Examples. The present invention is not limited in any way by Examples.
First, components (components (A), (B), (C) and (D)) used in Examples will be described.

(1) Component (A): polypropylene-based polymer

As the component (A), the following components (A-1) and (A-2) were used.
Component (A-1): "Sumitomo Noblen W101" which is a propylene homopolymer (trade name, manufactured by Sumitomo Chemical Co., Ltd.) (MFR (230°C, load: 2.16 kgf); 9 g/10 min)
Component (A-2): "Sumitomo Noblen U501E1" which is a propylene homopolymer (trade name, manufactured by Sumitomo Chemical Co., Ltd.) (MFR (230°C, load: 2.16 kgf); 100 g/10 min)

(2) Component (B): acid-modified polypropylene

As the component (B), the following components (B-1) and (B-2) were used.
Component (B-1): an acid-modified polypropylene-based polymer (maleic anhydride-modified polypropylene-based polymer) produced by a method described in JP-A-2002-256023 using a propylene homopolymer MFR (230°C, load: 2.16 kgf): 170 (g/10 min), maleic anhydride graft amount: 0.32 (mass%), graft efficiency: 64 (%)
Component (B-2): "Bondyram 1001" (trade name, manufactured by BYK Corporation), MFR (230°C, load: 2.16 kgf): 320 (g/10 min), maleic anhydride graft amount: 0.41 (mass%), graft efficiency: 60 (%)

(3) Component (C): glass fiber

As the component (C), the following components (C-1), (C-2), and (C-3) were used. The acidic functional group content, the water-soluble base component content, the water-soluble weak acid salt content, and the total nitrogen content in the component (C) are presented in Table 1 below.
Component (C-1): "CS-249A-10C" (trade name, chopped strand manufactured by Owens Corning Co., Ltd., fiber diameter: 10.5 um, acidic functional group content measured by the acid-base titration method: less than 0.01 mmol/g, water-soluble base component content: 0.04 mmol/g, water-soluble weak acid salt content: 0.04 mmol/g, total nitrogen content measured by chemiluminescence method: 140 ppm)
Component (C-2): "ECS10-03-508H" (trade name, chopped strand manufactured by JUSHI JAPAN CO.,LTD., fiber diameter: 10.5 um, acidic functional group content measured by the acid-base titration method: less than 0.01 mmol/g, water-soluble base component content: 0.03 mmol/g, water-soluble weak acid salt content: 0.02 mmol/g, total nitrogen content measured by chemiluminescence method: 70 ppm)
Component (C-3): "T480H" (trade name, chopped strand manufactured by Nippon Electric Glass Co., Ltd., fiber diameter: 10.5 um, acidic functional group content measured by the acid-base titration method: less than 0.01 mmol/g, water-soluble base component content: 0.81 mmol/g, water-soluble weak acid salt content: 0.55 mmol/g, total nitrogen content measured by chemiluminescence method: 120 ppm)

[Table 1]

(Table 1)

|  | Acidic functional group content (mmol/g) | Water-soluble base component content (mmol/g) | Water-soluble weak acid salt content (mmol/g) | Total nitrogen content (ppm) |
|---|---|---|---|---|
| Component (C-1) | < 0.01 | 0.04 | 0.04 | 140 |
| Component (C-2) | < 0.01 | 0.03 | 0.02 | 70 |
| Component (C-3) | < 0.01 | 0.81 | 0.55 | 120 |

(4) Component (D): nucleating agent

As the component (D), hydroxy-di(p-tert-butylbenzoic acid) aluminum (AL-PTBBA, manufactured by Japan ChemteX Corporation) was used.

The physical properties exhibited in Examples were measured as follows.

(i) Melt flow rate (MFR) (unit: g/10 min)

A melt flow rate was measured at a temperature of 230°C and a load of 2.16 kgf in accordance with the method defined in JIS K7210.

(ii) Tensile strength

A tensile strength was measured at a tensile speed of 5 mm/min at a measurement atmosphere temperature of 23°C in accordance with JIS K7161. A test piece was used after an ISO multi-purpose test piece type A was molded by injection molding and allowed to stand in an atmosphere of 23°C and a humidity of 50% for 48 hours to adjust a state. Here, the "tensile strength" is used as an "initial tensile strength" in calculation of formula (10) of wet-heat resistance strength retention in the following (iii).

(iii) Wet-heat resistance strength retention

The ISO multi-purpose test piece type A molded by injection molding was exposed in a thermostatic tank at 80°C and a humidity of 95% for 2000 hours, taken out, and then allowed to stand at 23°C and a humidity of 50% for 24 hours to adjust a state. Thereafter, in accordance with the method defined in JIS K7161, the tensile strength after treatment (after 2000 hours) was measured at a tensile speed of 5 mm/min at a measurement atmosphere temperature of 23°C, and the wet-heat resistance strength retention was calculated by the following formula (10).

```
Formula (10): Wet-heat resistance strength retention

(%)

            = 100 × tensile strength after treatment

(after 2000 hours)/initial tensile strength
```

(iv) Weld tensile strength

Using a test piece formed by filling the polypropylene-based resin composition of the present invention into a dumbbell die from two points on both end sides of the dumbbell die when an ASTMD635 Type 1 dumbbell was molded, and performing injection molding such that a weld line was formed at the center of a parallel part of the molded ASTMD635 Type 1 dumbbell, a weld tensile strength was measured at a tensile speed of 10 mm/min at a measurement atmosphere temperature of 23°C.

(v) Acidic functional group content

The acidic functional group content of the component (C): glass fiber was determined by the following acid-base titration method.

Specifically, 30 mL of a sodium hydroxide aqueous solution (0.05 mol/L) was added to 1 g of the freeze-pulverized sample (the component (C-1), (C-2), or (C-3)), and the resulting mixture was vertically shaken for four hours using a shaker, and then left for a while.

Thereafter, the obtained supernatant was filtered using a syringe filter, a 0.05 mol/L hydrochloric acid standard solution was added dropwise to 15 mL of the obtained filtrate, the resulting solution was titrated, and a point at which a potential change ($\Delta E/\Delta V$) per dropping amount was maximum was defined as an equivalence point A.

In addition, as a blank test, a 0.05 mol/L hydrochloric acid standard solution was added dropwise to 15 mL of a sodium hydroxide aqueous solution (0.05 mol/L), and a point at which a potential change ($\Delta E/\Delta V$) per dropping amount was maximum was defined as an equivalence point B.

Using the values obtained as described above, the acidic functional group content (mmol/g) was calculated by the following formula (2).

$$\text{Formula (2): Acidic functional group content (mmol/g)}$$
$$= (B - A) \times 0.05 \times (30/15)/S$$

In formula (2),

A represents a titration amount (mL) of hydrochloric acid at the equivalence point A,
B represents a titration amount (mL) of hydrochloric acid at the equivalence point B, and
S represents the mass (g) of the sample.

(vi) Water-soluble base component content and water-soluble weak acid salt content

The water-soluble base component content and the water-soluble weak acid salt content were determined by the following titration method.

Specifically, 30 mL of a hydrochloric acid aqueous solution (0.05 mol/L) was added to 1 g of the freeze-pulverized sample (the component (C-1), (C-2), or (C-3)), and the resulting mixture was vertically shaken for four hours using a shaker, and then left for a while.

Thereafter, the obtained supernatant was filtered using a syringe filter, a 0.05 mol/L sodium hydroxide aqueous solution was added dropwise to 15 mL of the obtained filtrate, and points at which a potential change ($\Delta E/\Delta V$) per dropping amount was maximum were defined as an equivalence point C1 and an equivalence point C2 in descending order of dropping amount.

In addition, as a blank test, a 0.05 mol/L sodium hydroxide aqueous solution was added dropwise to 15 mL of a hydrochloric acid aqueous solution (0.05 mol/L), and a point at which a potential change ($\Delta E/\Delta V$) per dropping amount was maximum was defined as an equivalence point D.

Then, the water-soluble base component content (mmol/g) was calculated by the following formula (3).

$$\text{Formula (3): Water-soluble base component content (mmol/g)}$$
$$= (d - c1) \times 0.05 \times (30/15)/S$$

In formula (3),

d represents a titration amount (mL) of the sodium hydroxide aqueous solution at the equivalence point D,
c1 represents a titration amount (mL) of the sodium hydroxide aqueous solution at the equivalence point C1, and
S represents the mass (g) of the sample.

Note that when only one equivalence point C appears in the above titration operation, the water-soluble weak acid salt content is 0 mmol/g. When two equivalence points C (equivalence points C1 and C2) appeared, the water-soluble weak acid salt content (mmol/g) was calculated by the following formula (4).

$$\text{Formula (4): Water-soluble weak acid salt content (mmol/g)}$$

$$= (c_1 - c_2) \times 0.05 \times (30/15)/S$$

In formula (4),

c1 represents a titration amount (mL) of the sodium hydroxide aqueous solution at the equivalence point C1,
c2 represents a titration amount (mL) of the sodium hydroxide aqueous solution at the equivalence point C2 (here, c1 > c2), and
S represents the mass (g) of the sample.

(vii) Total nitrogen content

The total nitrogen content was measured by a chemiluminescence method using a trace total nitrogen analyzer TN-2100H (trade name, manufactured by Nitto Seiko Analytech Co., Ltd.) in accordance with the method defined in JIS K 2609.

<Example 1>

(1) Production of propylene-based resin composition

To 61.5 parts by mass of the component (A-1), 1.5 parts by mass of the component (B-1), and 37 parts by mass of the component (C-1), that is, to 100 parts by mass of the total amount of the components (A), (B), and (C), 0.1 parts by weight of Songnox 6260 (trade name, bis 2,4 di-t-butylphenyl pentaerythritol diphosphite manufactured by Songwon International AG) as an antioxidant, 0.2 parts by weight of Sumilizer GA-80 (trade name, 3,9-bis[1,1 dimethyl-2-(β-(3-t-butyl-4-hydroxy-5-methylphenyl) propionyloxy) ethyl]-2,4,8,10-tetraoxaspiro [5,5] undecane manufactured by Sumitomo Chemical Co., Ltd.), 0.2 parts by weight of Sumilizer TPM (trade name, dimyristyl thiodipropionate manufactured by Sumitomo Chemical Co., Ltd.), 0.1 parts by weight of AL-PTBBA (hydroxy-di(p-tert-butylbenzoic acid) aluminum) as a nucleating agent, and 0.7 parts by weight of a pigment MB containing acetylene black as a pigment were added and mixed to obtain a mixture.
Thereafter, the obtained mixture was melt-kneaded at an extrusion rate of 50 kg/hr, 230°C, and a screw rotation speed of 200 rpm using a twin-screw kneading extruder to produce a pellet-shaped propylene-based resin composition. Note that, in the production of the propylene-based resin composition, the component (C-1) was separately side-fed from a side feeder included in the twin-screw kneading extruder.

(2) Production of molded product of propylene-based resin composition

The obtained propylene-based resin composition pellet was injection-molded at a cylinder temperature of 230°C and a die temperature of 50°C using an injection molding machine (M70 manufactured by MEIKI CO., LTD.) to obtain an ISO multi-purpose test piece.
In addition, the obtained propylene-based resin composition pellet was injection-molded at a cylinder temperature of 240°C and a die temperature of 50°C using an injection molding machine (IS100EN manufactured by Toshiba Machine Co., Ltd.) to obtain an ASTM Type 1 dumbbell having a weld formed at the center of a parallel part as a test piece.

(3) Evaluation

Physical properties of the obtained test pieces were evaluated as described above. Evaluation results are presented in Tables 2 and 3 below.

<Examples 2 to 7>

A propylene-based resin composition and a molded product were produced and evaluated in a similar manner to the above Example 1 except that the components (A) to (D) were changed as presented in Tables 2 and 3 below.

Results thereof are presented in Tables 2 and 3 below.

<Comparative Examples 1 to 3>

A propylene-based resin composition and a molded product were produced and evaluated in a similar manner to the above Example 1 except that the components (A) to (D) were changed as presented in Tables 2 and 3 below. Results thereof are presented in Tables 2 and 3 below.

[Table 2]

| | | Example 1 | Example 2 | Comparative Example 1 | Example 3 | Example 4 | Comparative Example 2 |
|---|---|---|---|---|---|---|---|
| Polypropylene | A-1 | 61.5 | 61.5 | 61.5 | | | |
| -based polymer | A-2 | | | | 48.5 | 48.5 | 48.5 |
| Acid-modified polypropylene | B-1 | 1.5 | 1.5 | 1.5 | 1.5 | 1.5 | 1.5 |
| | B-2 | | | | | | |
| Glass fiber | C-1 | 37 | | | 50 | | |
| | C-2 | | 37 | | | 50 | |
| | C-3 | | | 37 | | | 50 |
| Nucleating agent | D | 0.1 | 0.1 | 0.1 | - | - | - |
| MFR | (g/10 min) | 2.7 | 2.5 | 2.4 | 14 | 13 | 13 |
| Wet-heat resistance strength retention | % | 98 | 99 | 94 | 100 | 101 | 90 |
| Weld tensile strength | MPa | 39.3 | 36.1 | 37.1 | 32.8 | 30.5 | 30.5 |

[Table 3]

| | | Example 5 | Example 6 | Comparative Example 3 | Example 7 |
|---|---|---|---|---|---|
| Polypropylene-based polymer | A-1 | 61.5 | 61.5 | 61.5 | |
| | A-2 | | | | 48.5 |
| Acid-modified polypropylene | B-1 | 1.5 | 1.5 | 1.5 | |
| | B-2 | | | | 1.5 |
| Glass fiber | C-1 | 37 | | | 50 |
| | C-2 | | 37 | | |
| | C-3 | | | 37 | |
| Nucleating agent | D | - | - | - | - |
| MFR | (g/10 min) | 18 | 14 | 16 | 13 |
| Wet-heat resistance strength retention | % | 100 | 100 | 85 | 100 |
| Weld tensile strength | MPa | 33.9 | 33.5 | 32.7 | 31.3 |

**Claims**

1.  A polypropylene-based resin composition comprising:

    40 to 90 mass% of a component (A): polypropylene-based polymer;

0.1 to 10 mass% of a component (B): acid-modified polypropylene-based polymer; and

10 to 60 mass% of a component (C): glass fiber having a water-soluble base component content of 0.1 mmol/g or less and a water-soluble weak acid salt content of 0.1 mmol/g or less.

2. The polypropylene-based resin composition according to claim 1, wherein the component (C) is a glass fiber having a total nitrogen content of 70 ppm or more as measured by a chemiluminescence method.

3. The polypropylene-based resin composition according to claim 1 or 2, having a melt flow rate of 1 to 20 g/10 min as measured under conditions of a temperature of 230°C and a load of 2.16 kgf.

4. The polypropylene-based resin composition according to any one of claims 1 to 3, wherein the component (B) is an acid-modified polypropylene-based polymer having a total graft amount of an unsaturated carboxylic acid unit and an unsaturated carboxylic acid derivative unit of 0.3 mass% or more and a melt flow rate of 300 g/10 min or less as measured under conditions of a temperature of 230°C and a load of 2.16 kgf.

5. The polypropylene-based resin composition according to any one of claims 1 to 4, further comprising 0.01 to 1 part by mass of a component (D): nucleating agent with respect to 100 parts by mass of a total amount of the components (A), (B), and (C).

6. A molded product comprising the polypropylene-based resin composition according to any one of claims 1 to 5.

7. An air intake manifold comprising the polypropylene-based resin composition according to any one of claims 1 to 5.

## INTERNATIONAL SEARCH REPORT

| International application No. |
|---|
| **PCT/JP2021/037719** |

### A. CLASSIFICATION OF SUBJECT MATTER

*C08L 23/10*(2006.01)i; *C08K 7/14*(2006.01)i; *C08L 23/26*(2006.01)i
FI:  C08L23/10; C08K7/14; C08L23/26

According to International Patent Classification (IPC) or to both national classification and IPC

### B. FIELDS SEARCHED

Minimum documentation searched (classification system followed by classification symbols)

C08L23/10; C08K7/14; C08L23/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-158787 A (PRIME POLYMER CO., LTD.) 01 October 2020 (2020-10-01) entire text | 1-7 |
| A | JP 2020-66737 A (DAICEL POLYMER LTD.) 30 April 2020 (2020-04-30) entire text | 1-7 |
| A | JP 2014-208807 A (JAPAN POLYPROPYLENE CORP.) 06 November 2014 (2014-11-06) entire text | 1-7 |
| A | JP 2008-106281 A (OWENS CORNING MANUFACTURING LTD.) 08 May 2008 (2008-05-08) entire text | 1-7 |
| A | JP 2005-126601 A (IDEMITSU KOSAN CO., LTD.) 19 May 2005 (2005-05-19) entire text | 1-7 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/037719**

| Patent document cited in search report | | | Publication date (day/month/year) | Patent family member(s) | | | Publication date (day/month/year) |
|---|---|---|---|---|---|---|---|
| JP | 2020-158787 | A | 01 October 2020 | US<br>entire text<br>EP<br>CN | 2019/0144651<br><br>3456773<br>109071897 | A1<br><br>A1<br>A | |
| JP | 2020-66737 | A | 30 April 2020 | (Family: none) | | | |
| JP | 2014-208807 | A | 06 November 2014 | CN | 105102529 | A | |
| JP | 2008-106281 | A | 08 May 2008 | (Family: none) | | | |
| JP | 2005-126601 | A | 19 May 2005 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014157391 A
- JP 61218606 A
- JP 5194685 A
- JP 7216017 A
- JP 9316147 A
- JP 10212319 A
- JP 2004182981 A
- JP 55075410 A
- JP 2565753 B
- JP 2002256023 A

**Non-patent literature cited in the description**

- Polymer Solution, Polymer Experiment 11. KYORIT-SU SHUPPAN CO., LTD, 1982, 491